# FASCICULE DE BREVET EUROPEEN

(11) **EP 3 867 802 B1**
(45) Date de publication et mention de la délivrance du brevet: **06.12.2023**
(21) Numéro de dépôt: 19786605.6
(22) Date de dépôt: 17.10.2019
(51) Int. Cl.: G06V 40/20

(54) **PROCÉDÉ D'ANALYSE DES MOUVEMENTS D'UNE PERSONNE ET DISPOSITIF POUR SA MISE EN OEUVRE**
VERFAHREN ZUR ANALYSE DER BEWEGUNGEN EINER PERSON UND VORRICHTUNG DAMIT
METHOD FOR ANALYZING THE MOVEMENTS OF A PERSON, AND DEVICE FOR IMPLEMENTING SAME

(30) Priorité: 18.10.2018 FR 1859634
(43) Date de publication de la demande: 25.08.2021
(73) Titulaire: A.I.O., 33600 Pessac (FR)
(72) Inventeur: DANE, Cyril, 33400 TALENCE (FR); BOUDINET, Florian, 33600 PESSAC (FR)
(74) Mandataire: Fantin, Laurent
(86) Numéro de dépôt international: PCT/EP2019/078244
(87) Numéro de publication internationale: WO 2020/079163

(56) Documents cités:
- JP-B2- 3 565 387
- US-A1- 2007 188 472
- DONGHEUI LEE ET AL: "Missing motion data recovery using factorial hidden Markov models", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW; PASADENA, CA, USA, MAY 19-23, 2008, IEEE, PISCATAWAY, NJ, USA, 19 May 2008 (2008-05-19), pages 1722-1728, XP031340393, ISBN: 978-1-4244-1646-2
- YAMAMOTO M ET AL: "Bayesian Classification of Task-Oriented Actions Based on Stochastic Context-Free Grammar", AUTOMATIC FACE AND GESTURE RECOGNITION, 2006. FGR 2006. 7TH INTERNATIO NAL CONFERENCE ON SOUTHAMPTON, UK 10-12 APRIL 2006, PISCATAWAY, NJ, USA,IEEE, 10 April 2006 (2006-04-10), pages 317-323, XP010911574, DOI: 10.1109/FGR.2006.28 ISBN: 978-0-7695-2503-7
- GUTEMBERG GUERRA-FILHO ET AL: "A Language for Human Action", IEEE COMPUTER SOCIETY, IEEE, USA, vol. 40, no. 5, 1 May 2007 (2007-05-01), pages 42-51, XP011181105, ISSN: 0018-9162, DOI: 10.1109/MC.2007.154

## Description

La présente demande se rapporte à un procédé des mouvements d'une personne ainsi qu'à un dispositif pour sa mise en oeuvre. Selon des applications, le procédé de l'invention peut être utilisé pour évaluer la pénibilité au travail et/ou pour optimiser certains mouvements au niveau d'un poste de travail.

La pénibilité au travail est jusqu'ici appréciée de manière subjective, au regard de certains facteurs comme par exemple :
- la manutention manuelle de charges lourdes,
- les postures pénibles définies comme des positions forcées des articulations, ou
- le travail répétitif caractérisé par la répétition d'un même geste, à une cadence contrainte, avec un temps de cycle défini.

Les entreprises qui cherchent à réduire la pénibilité au travail de leurs employés, pour limiter par exemple l'apparition de troubles musculo-squelettiques, disposent d'outils d'évaluation tels que des questionnaires, des grilles d'évaluation, mais d'aucun outil pour la quantifier. Les entreprises peuvent avoir recours à un ergonome pour améliorer les conditions de travail des personnes à leur poste de travail. La démarche de l'ergonome comprend une première phase d'observation du poste de travail, une deuxième phase d'analyse se basant sur des grilles ergonomiques et une troisième étape de formulation de recommandations qui sont généralement un compromis de son analyse et des différents points de vue des personnes évoluant au poste de travail.

Cette démarche n'est pas pleinement satisfaisante car la première phase d'observation est relativement longue et incomplète. Par ailleurs, les recommandations formulées par l'ergonome reposant sur des observations et non sur des mesures de biomécaniques précises, la qualité de ses recommandations est étroitement liée à son niveau d'expertise. Dans le domaine du sport, de la réalité augmentée et de l'animation, il existe des dispositifs de suivi des mouvements d'une personne permettant de suivre les mouvements des différents segments d'une personne évoluant dans une scène. Selon un premier mode de réalisation, un tel dispositif comprend plusieurs caméras agencées de manière à couvrir la scène et des marqueurs portés par la personne, qui sont agencés de manière à identifier ses différents segments.

Même si les dispositifs de ce premier mode de réalisation permettent de suivre de manière très précise les différents mouvements des différents segments d'une personne, ils peuvent difficilement être utilisés dans le cadre de l'amélioration des postes de travail pour les raisons suivantes :
- En raison de coûts de revient et d'exploitation élevés, de tels dispositifs ne peuvent pas être déployés dans le cadre de l'analyse et l'amélioration des postes de travail.
- Compte tenu de la fragilité et du prix de certains de leurs composants, ces dispositifs sont généralement utilisés dans des conditions proches de celles d'un laboratoire, incompatibles à un environnement tel qu'un chantier dans le domaine du bâtiment.
- L'aspect intrusif du dispositif, en raison de la mise en place de marqueurs sur la personne, peut fausser les mesures.
- Le temps de préparation et de calibration des équipements est relativement long.

Selon un deuxième mode de réalisation issu notamment du domaine du jeu vidéo, un dispositif de suivi des mouvements d'un joueur comprend un capteur de mouvements sous la forme d'une caméra de profondeur, positionnée en face du joueur, ainsi qu'un logiciel de traitement du signal de la caméra configuré pour identifier les différents segments du joueur et leurs mouvements afin de représenter ces différents segments sous la forme d'un avatar filiforme. Les dispositifs de ce deuxième mode de réalisation ont des coûts de revient et d'exploitation nettement inférieurs à ceux du premier mode de réalisation, et sont par conséquent compatibles avec une méthode d'amélioration d'un poste de travail. De plus, ils ne nécessitent pas d'équiper les personnes de marqueurs.

Malgré ces avantages, un dispositif de suivi des mouvements selon le deuxième mode de réalisation, en tant que tel, ne peut pas être utilisé pour obtenir un modèle dynamique fiable d'une personne en vue d'améliorer son poste de travail ou réduire la pénibilité.

Un procédé d'analyse automatique du mouvement par représentation symbolique pour corriger des données de mouvements manquantes est connu par exemple de DONGHEUI LEE ET AL: "Missing motion data recovery using factorial hidden Markov models",2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW; PASADENA, CA, USA, MAY 19-23, 2008, IEEE, PISCATAWAY, NJ, USA, 19 mai 2008 (2008-05-19), pages 1722-1728, ,ISBN: 978-1-4244-1646-2.

La présente invention vise à remédier à tout ou partie des inconvénients de l'art antérieur. A cet effet, l'invention a pour objet un procédé d'analyse d'au moins une séquence de mouvements réalisés par une personne présentant un ensemble de points caractéristiques, chaque mouvement comprenant une succession d'actions élémentaires. Le procédé comprend une étape d'observation de la séquence de mouvements par au moins un système d'acquisition configuré pour fournir des données brutes relatives aux positions d'au moins certains points caractéristiques de l'ensemble de points caractéristiques.

Selon l'invention, le procédé comprend :
- une étape de segmentation de la séquence de mouvements en unités temporelles associées chacune à un instant,
- une étape de détermination, pour chaque instant, des positions d'au moins certains points caractéristiques de l'ensemble de points caractéristiques à l'aide du système d'acquisition,
- une étape d'attribution, à chaque instant, d'au moins un code de position pour au moins certains points caractéristiques de l'ensemble de points caractéristiques en fonction pour chacun d'eux de la position déterminée de manière à obtenir une combinaison de codes de position à chaque instant,
- une étape d'attribution d'au moins un code d'action élémentaire pour chaque instant donné correspondant à la combinaison de codes de position à l'instant donné, et
- une étape de vérification syntaxique des codes d'action élémentaire et/ou des codes de position à partir d'au moins un langage structuré qui présente au moins une règle et au moins un lexique afin d'affiner les données brutes relatives aux positions des points caractéristiques.

Cette solution permet d'obtenir à partir de données brutes un suivi fiable et précis des mouvements d'une personne.

D'autres caractéristiques et avantages ressortiront de la description qui va suivre de l'invention, description donnée à titre d'exemple uniquement, en regard des dessins annexés sur lesquels :
- la figure 1 est une représentation schématique d'une étape d'étalonnage d'un dispositif de suivi des mouvements d'une personne qui illustre un mode de réalisation d'invention,
- la figure 2 est une représentation schématique du dispositif de suivi des mouvements d'une personne visible sur la figure 1 après l'étape d'étalonnage,
- la figure 3 est une représentation schématique d'une étape d'auto-apprentissage,
- la figure 4 est une représentation schématique des différentes positions réelles d'un mouvement réel d'un avant-bras d'une personne,
- la figure 5 est une représentation schématique des différentes positions virtuelles déterminées par un dispositif de suivi des mouvements à partir de l'observation du mouvement réel visible sur la figure 4,
- la figure 6 est une traduction du mouvement réel visible sur la figure 4 sous la forme d'une succession de caractères d'un système d'écriture,
- la figure 7 est une traduction des différentes positions visibles sur la figure 5 en utilisant le même système d'écriture que celui utilisé à la figure 6,
- la figure 8 est une représentation schématique d'un boîtier d'acquisition qui illustre un mode de réalisation de l'invention,
- la figure 9 est une représentation schématique d'un dispositif de suivi des mouvements d'une personne qui illustre un mode de réalisation de l'invention,
- la figure 10 est une représentation schématique des différentes articulations d'une personnes,
- la figure 11 est un tableau répertoriant l'état des différentes articulations et les gestes élémentaires à différents instants ainsi que les mouvements réalisés par une personne,
- la figure 12 est un tableau répertoriant les distances entre les articulations à un instant donné.

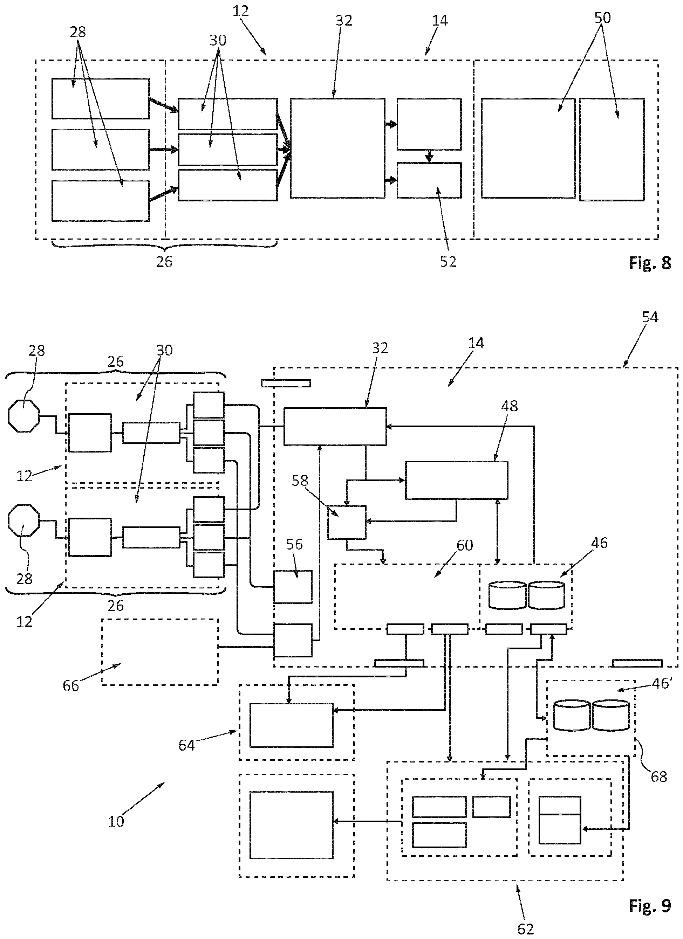

Sur la figure 9, on a représenté en 10 un dispositif d'analyse des mouvements d'une personne qui comprend au moins un boîtier d'acquisition 12 et au moins un système de traitement et d'analyse 14. Selon une application, ce dispositif d'analyse des mouvements d'une personne 10 est configuré pour obtenir un modèle dynamique de la personne. Ainsi, l'analyse des mouvements d'une personne n'est pas limitée à l'analyse de la cinématique des mouvements. Selon l'invention, l'analyse des mouvements couvre l'analyse de la cinématique des mouvements, l'analyse des efforts, des puissances et/ou des énergies produites associés aux mouvements.

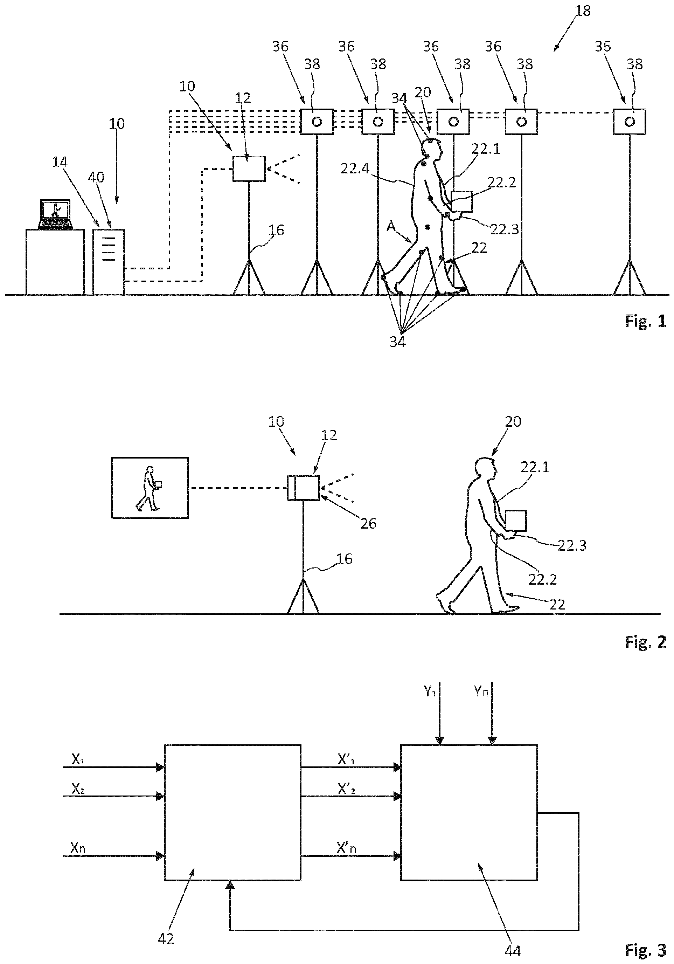

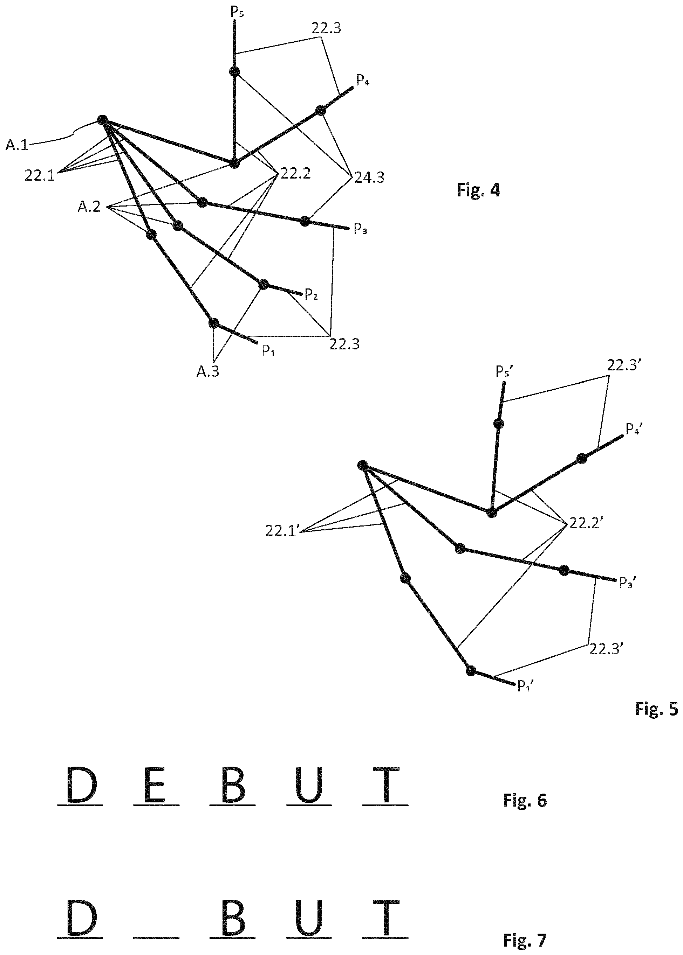

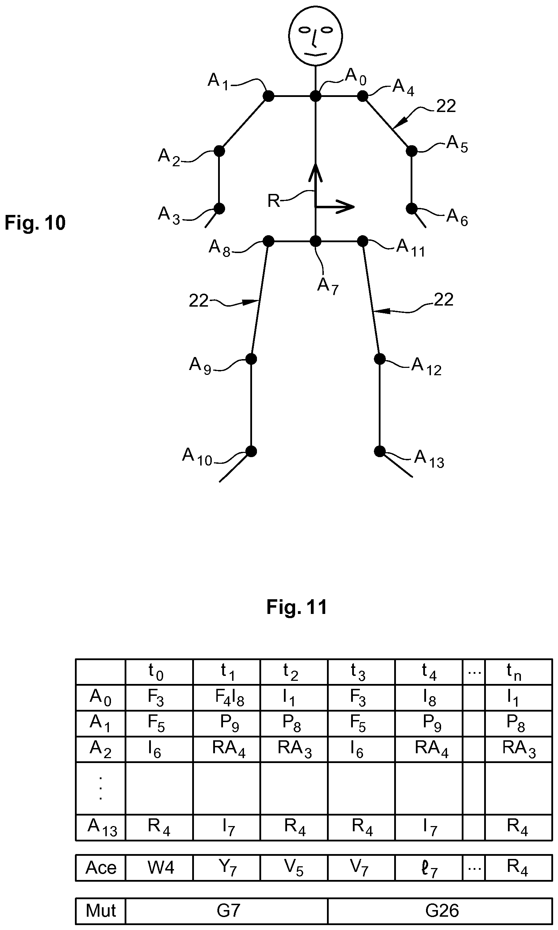

Selon une configuration illustrée par les figures 1 et 2, un boîtier d'acquisition 12 est supporté par un trépied 16. Bien entendu, l'invention n'est pas limitée à cet agencement. Quelle que soit la configuration, chaque boîtier d'acquisition 12 est positionné et orienté de manière à visualiser une scène 18 dans laquelle peut évoluer au moins une personne 20. Pour la suite de la description, une personne 20 (visible sur la figure 2 par exemple) comprend plusieurs segments réels, référencés de manière générale 22 ou de manière dissociée 22.1, 22.2, 22.3 (comme illustré sur la figure 4), reliés par des articulations réelles, référencées de manière générale A ou de manière dissociée A.0 à A.13 (comme illustré sur les figures 4 et 10). Ces segments réels 22 correspondent aux différentes parties de son corps (tronc, haut du bras droit ou gauche, avant-bras droit ou gauche, main droite ou gauche ,...) qui sont articulées les unes par rapport aux autres grâce aux articulations réelles A qui peuvent être des liaisons de type rotule (trois rotations possibles) ou de type pivot (une rotation possible).

Chaque boîtier d'acquisition 12 comprend au moins un capteur d'acquisition 26 configuré pour déterminer une position virtuelle brute, dans un repère virtuel, pour chacun des segments virtuels correspondant à au moins certains des segments réels 22 et/ou pour chacune des articulations virtuelles correspondant à au moins certaines articulations réelles A.

Selon un mode de réalisation non limitatif, chaque capteur d'acquisition 26 comprend une caméra de profondeur 28, de type RGB-D, configurée pour émettre un signal en fonction du flux d'images saisies, ainsi qu'un contrôleur 30 dans lequel est implémenté un logiciel de traitement d'images configuré pour traiter le signal de la caméra 28 et en déduire la position virtuelle brute de chaque segment virtuel et/ou de chaque articulation virtuelle correspondant aux segments réels 22 et/ou aux articulations réelles A filmé(e)s par la caméra de profondeur 28.

Le dispositif d'analyse des mouvements d'une personne 10 peut comprendre d'autres capteurs d'acquisition 26, comme par exemple des capteurs d'effort, de puissance.

Selon une configuration, le (ou les) capteur(s) d'acquisition 26 est (sont) configuré(s) pour fournir en sortie un ensemble de données brutes qui comprennent au moins certaines données anatomiques et/ou morphologiques de la personne (longueur, masse, centre de gravité,... de chaque segment virtuel) et/ou au moins certaines données dynamiques de la personne (vecteur de rotation de chaque couple de segments virtuels reliés, efforts, moments appliqués à chaque segment, vitesse en un point donné de chaque segment,...). Selon un mode de réalisation visible par exemple sur les figures 8 et 9, le dispositif d'analyse des mouvements d'une personne comprend plusieurs capteurs d'acquisition 26. Ces capteurs d'acquisition 26 peuvent déterminer des valeurs redondantes pour certaines données de l'ensemble de données brutes. Dans ce cas, ces valeurs redondantes sont fusionnées de manière à établir pour chaque donnée brute une valeur unique.

Les capteurs d'acquisition 26 ne sont pas plus décrits car certains peuvent être identiques aux dispositifs d'analyse des mouvements du deuxième mode de réalisation de l'art antérieur.

Comme pour l'art antérieur, le capteur d'acquisition 26 ou les capteurs d'acquisition 26 donne(nt), pour chaque segment virtuel et/ou chaque articulation virtuelle, une position peu fiable dite brute qui n'est pas satisfaisante dans le cadre d'une analyse précise des mouvements des segments réels et/ou des articulations réelles d'une personne.

Quel que soit le mode de réalisation, le (ou les) capteur(s) d'acquisition 26 est (ou sont) configuré(s) pour déterminer, à partir de l'observation d'une personne, un ensemble de données brutes permettant de positionner dans un repère virtuel un ensemble de segments virtuels et/ou d'articulations virtuelles correspondant aux segments réels et/ou aux articulations réelles de la personne observée. Le (ou les) capteur(s) d'acquisition 26 est (ou sont) configuré(s) pour déterminer, à partir de l'observation d'une personne, un modèle dynamique de la personne observée.

Pour la suite de la description, par un ou le capteur on entend aussi bien un unique capteur d'acquisition 26 que plusieurs capteurs d'acquisition 26 permettant d'obtenir un ensemble de données brutes.

Selon un mode de réalisation, le dispositif d'analyse des mouvements d'une personne 10 comprend un module de traitement 32 configuré pour corriger la valeur de chaque donnée brute mesurée par le capteur d'acquisition 26 afin d'établir un ensemble de données affinées.

Le niveau de correction de chaque donnée brute est tel que la position virtuelle de chaque segment virtuel et/ou de chaque articulation virtuelle déduite à partir de l'ensemble de données affinées est très proche de la position réelle de chaque segment réel et/ou de chaque articulation réelle de la personne observée, ce qui permet une analyse précise des mouvements des segments réels et/ou des articulations réelles d'une personne.

Selon un mode de réalisation de l'invention, le module de traitement 32 comprend au moins un réseau de neurones artificiels 42 présentant des paramètres optimisés par une méthode d'apprentissage.

Ce réseau de neurones artificiels 42 comprend un nombre d'entrées ou de sorties supérieur ou égal au nombre de données brutes à traiter.

Selon un mode opératoire, le nombre de données brutes est de quarante-six (46). Selon une configuration, le réseau de neurones artificiels 42 comprend vingt-sept (27) entrées et vingt-sept (27) sorties.

Selon une architecture, le réseau de neurones artificiels 42 comprend cent dix-huit (118) neurones répartis en quatre (4) couches, vingt-sept (27) au niveau de chaque couche d'entrée ou de sortie et trente-deux (32) au niveau de chaque couche intermédiaire. Le réseau de neurones artificiels 42 a une structure similaire à une structure de type autoencodeur variationnel (ou VAE pour variational auto-encoder en anglais).

En variante, le réseau de neurones artificiels 42 a une structure de type récurrent à mémoire court terme et long terme (ou LSTM pour Long Short Term Memory en anglais).

En variante, le réseau de neurones artificiels 42 est de type entièrement connecté (fully connected en anglais), chaque neurone d'une couche étant connecté à tous les neurones de la couche supérieure.

Généralement, le réseau de neurones artificiels 42 comprend au moins quatre couches de neurones.

Selon une configuration, le réseau de neurones artificiels 42 comprend au moins vingt-sept (27) entrées et vingt-sept (27) sorties.

Selon une première configuration, le module de traitement 32 comprend un unique réseau de neurones artificiels 42 configuré pour traiter toutes les données brutes. Selon une autre configuration, le module de traitement 32 comprend plusieurs réseaux de neurones artificiels traitant chacun des données brutes différentes. A titre d'exemple, un premier réseau est configuré pour traiter les données brutes relatives aux vecteurs de rotation et un deuxième réseau est configuré pour traiter les données relatives aux longueurs des segments.

Comme illustré sur la figure 1, la méthode d'apprentissage comprend une étape d'observations simultanées d'une personne 20 équipée de marqueurs 34 par un dispositif d'analyse des mouvements 10 selon l'invention et par un dispositif d'analyse de référence 36.

Le dispositif d'analyse de référence 36 comprend plusieurs caméras 38 et un système de traitement 40 configuré pour établir un ensemble de données de référence Y1 à Yn obtenues suite à l'observation des segments réels et/ou des articulations réelles de la personne 20. En variante, le dispositif d'analyse de référence 36 comprend, en plus des caméras 38, au moins un capteur d'effort, comme par exemple une dalle de force.

Ce dispositif d'analyse de référence 36 n'est pas plus décrit car il peut être identique à l'un de ceux du premier mode de réalisation de l'art antérieur. A titre d'exemple, le dispositif d'analyse de référence 36 peut être un dispositif commercialisé sous la dénomination OPTITRACK, comportant entre 8 et 32 caméras, ou un dispositif commercialisé sous la dénomination VICON, comportant une dalle de force.

Comme illustré sur la figure 3, les données brutes X1 à Xn obtenues à l'aide du dispositif d'analyse des mouvements 10 sont traitées par le réseau de neurones artificiels 42 du module de traitement 32 de manière à obtenir un ensemble de données affinées X1' à Xn'. Ces données affinées X1' à Xn' sont comparées à l'aide d'une fonction perte 44 aux données de référence Y1 à Yn obtenues à l'aide du dispositif d'analyse de référence 36. En fonction de cette comparaison, les paramètres du réseau de neurones artificiels 42 sont modifiés de manière à minimiser la différence entre les données affinées X1' à Xn' et les données de référence Y1 à Yn.

La modification des paramètres du réseau de neurones artificiels 42 se base sur la méthode de rétropropagation du gradient visant à corriger le poids des neurones, de la dernière couche vers la première couche.

Au fur et à mesure des observations, le module de traitement 32 devient de plus en plus précis, les données affinées X1' à Xn' étant sensiblement égales aux données de référence Y1 à Yn obtenues par le dispositif d'analyse de référence 36.

Il est possible d'étalonner plusieurs dispositifs d'analyse des mouvements 10 simultanément. Pour chacun d'eux, les données brutes X1 à Xn sont traitées par le réseau de neurones artificiels 42 du module de traitement 32 de manière à obtenir un ensemble de données affinées X1' à Xn' qui sont comparées aux données de référence Y1 à Yn.

Le dispositif d'analyse des mouvements 10 selon l'invention permet d'obtenir un suivi précis des segments d'une personne. Ses coûts de revient et d'exploitation étant nettement inférieurs à ceux d'un dispositif d'analyse de référence 36, il est possible de multiplier les observations et d'utiliser le dispositif selon l'invention dans des environnements tels que des chantiers dans le bâtiment par exemple.

Le fait de pouvoir multiplier les observations permet de collecter un grand nombre de données affinées relatives à une multitude de mouvements de différentes personnes, notamment au niveau de différents postes de travail.

Ainsi, il est possible d'observer plusieurs fois un même mouvement réalisé plusieurs fois par des personnes différentes (ayant des gabarits différents).

Le dispositif d'analyse des mouvements 10 comprend au moins une base de données 46 répertoriant, pour chaque mouvement, les différentes positions des différents segments aux différents moments du mouvement.

Les observations d'un même mouvement réalisé plusieurs fois par plusieurs personnes peuvent être regroupées dans la base de données 46 sous la forme d'une famille de mouvements. Pour la présente demande, une famille de mouvements comprend des mouvements proches, comme la famille regroupant les mouvements correspondant à une position statique debout, la famille des mouvements de saisie d'un objet au sol, la famille des mouvements de rotation du torse, la famille des mouvements de lever d'un bras,...

Même si le dispositif d'analyse des mouvements 10 permet d'obtenir des mesures précises, ces dernières peuvent être bruitées par différents facteurs comme des phénomènes d'occultation ou en raison des angles de vue ou de l'environnement extérieur. Ainsi, comme illustré sur les figures 4 et 5, un dispositif d'analyse des mouvements 10 peut déterminer, à partir d'un mouvement de segments réels 22.1 à 22.3 comprenant plusieurs positions réelles P1 à P5 successives des segments réels, les positions virtuelles P1', P3', P4', P5' des segments virtuels 22.1' à 22,3' (correspondant aux segments réels 22.1 à 22.3). Dans ce cas, la position virtuelle des segments virtuels correspondant à la position P2 n'a pas pu être déterminée.

Le dispositif d'analyse des mouvements 10 comprend un module d'analyse des mouvements configuré pour identifier le mouvement observé.

Selon un premier mode de réalisation, le module d'analyse des mouvements est configuré pour comparer le mouvement observé avec les mouvements stockés dans la base de données 46 et pour identifier la famille de mouvements à laquelle il appartient.

Selon un premier mode opératoire, un procédé d'analyse des mouvements d'une personne comprend une étape de segmentation d'un mouvement déterminé par le module de traitement 32 en une succession d'actions élémentaires ayant des durées égales, comprises entre 0,25 et 1 s, et une étape de traduction de chaque action élémentaire en un caractère d'un système d'écriture.

A cet effet, le dispositif d'analyse comprend un module d'analyse 48 configuré pour segmenter le mouvement déterminé par le module de traitement 32 et traduire chaque segment en un caractère d'un système d'écriture.

Chaque mouvement est traduit en une succession de caractères qui, en fonction de la complexité et/ou de la longueur du mouvement, forme une syllabe, un mot ou une phrase.

Selon une autre particularité, chaque mouvement déterminé par le module de traitement 32 est stocké, dans la base de données 46 ou une autre base de données 46', sous la forme d'une succession de segments, chaque segment étant traduit en un caractère d'un système d'écriture. Ainsi, à partir d'une multitude observations d'une multitude de mouvements traduits dans la base de données 46, 46' sous la forme de syllabes, de mots ou de phrases, il est possible d'établir un langage écrit structuré qui présente au moins une règle, généralement un ensemble de règles (comme des règles de grammaire par exemple) et au moins un lexique.

Ce procédé d'analyse des mouvements permet, lorsqu'au moins une action élémentaire d'un mouvement n'a pas pu être déterminée par le dispositif d'analyse des mouvements 10, de déterminer le caractère manquant à partir des règles et/ou du lexique du langage écrit structuré et en suivant l'action élémentaire dont le caractère déterminé est la traduction. Comme illustré sur les figures 4 et 6, à partir du mouvement de segments réels 22.1 à 22.3 visible sur la figure 4, le module d'analyse 48 segmente le mouvement observé en une succession de cinq actions élémentaires traduites par « D »-« E »-« B »-« U »-« T ». Ainsi, le mouvement de lever d'une main se traduit par le mot DEBUT dans le langage écrit et structuré.

Comme illustré sur les figures 5 et 6, si le module de traitement 32 n'identifie que les actions élémentaires 1, 3, 4 et 5 du mouvement, comme illustré sur la figure 5, le module d'analyse 48 traduit uniquement les actions élémentaires 1, 3, 4 et 5 en un « D », un « B », un « U », un « T » selon le langage écrit et structuré. A partir du lexique du langage écrit et structuré, le module d'analyse 48 en déduit que la lettre manquante est probablement un « E » et que le mouvement observé, traduit en DEBUT dans le langage écrit et structuré, correspond au mouvement de lever d'une main.

Selon une autre particularité, le fait de traduire chaque mouvement en un enchaînement de caractères peut permettre de comparer les enchaînements de caractères entre eux sur le plan de la pénibilité et d'affecter à chacun des enchaînements de caractères un degré de pénibilité en fonction de leur classement.

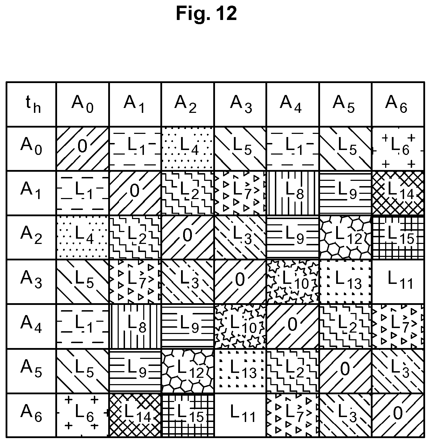

Selon un deuxième mode opératoire illustré par les figures 11 et 12, le procédé d'analyse des mouvements d'une personne comprend une première étape de segmentation d'au moins une séquence de mouvements en unités temporelles t0 à tn, n étant un entier. Chaque unité temporelle t0 à tn présente une durée comprise entre 0,25 et 1 s. Pour la suite de la description, chaque unité temporelle t0 à tn est associée à un instant t0 à tn. A minima, la séquence de mouvements comprend un mouvement.

Ainsi, une séquence de mouvements Mvt d'une personne comprend une succession d'actions élémentaires référencées généralement Ace (W4, Y7, V5,....), une action élémentaire pour chaque unité temporelle. Ainsi, les actions élémentaires ont toutes la même durée comprise entre 0,25 et 1 s.

A titre d'exemple, une séquence de mouvements d'une personne qui marche comprend les actions élémentaires suivantes : « lever la jambe droite », « poser la jambe droite », « lever la jambe gauche », « poser la jambe gauche », et ainsi de suite.

Le procédé d'analyse des mouvements d'une personne comprend une étape de détermination, pour chaque instant t0 à tn, de la position d'au moins certaines articulations A, ladite position étant déterminée par le boîtier d'acquisition 12. Selon un mode de réalisation, la position de chaque articulation A0 à A13 est déterminée.

La position des articulations A0 à A13 est donnée dans au moins un référentiel R, de préférence lié à la personne observée. Selon une configuration, un référentiel principal R est positionné au niveau du pelvis de la personne observée.

Selon une première variante, la position de chaque articulation A0 à A13 est donnée, à chaque instant, en coordonnées sphériques (trois angles), de proche en proche, sachant que la distance entre deux articulations reliées par un uniquement segment est constante. Ainsi, pour une première articulation A7ou A0 liée au référentiel principal R, sa position est donnée en coordonnées sphériques dans le référentiel principal R, sachant que la distance A0A7 est constante. Pour une deuxième articulation A8 (ou A11), en lien avec la première articulation A7, sa position est donnée en coordonnées sphériques dans un référentiel secondaire lié à la première articulation A7, sachant que la distance A7A8 (ou A7A11) est constante. De la même manière, pour une deuxième articulation A1 (ou A4) en lien avec la première articulation A0, sa position est donnée en coordonnées sphériques dans un référentiel secondaire lié à la première articulation A0, sachant que la distance A0A1 (ou A0A4) est constante. Pour une troisième articulation A2 (ou A5, ou A9, ou A12) en lien respectivement avec une deuxième articulation A1 (ou A4, ouA8, ou A11), sa position est donnée en coordonnées sphériques dans un référentiel tertiaire lié à la deuxième articulation A1 (ou A4, ou A8, ou A11). Pour une quatrième articulation A3 (ou A6, ou A10, ou A13) en lien respectivement avec une troisième articulation A2 (ou A5, ou A9, ou A12), sa position est donnée en coordonnées sphériques dans un référentiel quaternaire lié à la troisième articulation A2 (ou A5, ou A9, ou A12).

La position de chaque articulation A0 à A13 comprend au moins une valeur angulaire. Si l'articulation présente un seul degré de liberté, sa position comprend une unique valeur angulaire. Si l'articulation présente deux degrés de liberté, sa position comprend deux valeurs angulaires, une pour chaque degré de liberté. Enfin, si l'articulation présente trois degrés de liberté, sa position comprend trois valeurs angulaires, une pour chaque degré de liberté. Ainsi, la position de chaque articulation comprend une valeur angulaire pour chaque degré de liberté de l'articulation.

Pour chaque degré de liberté de chaque articulation, la valeur angulaire varie sur un secteur angulaire borné par des première et deuxième butées. Selon un mode de réalisation, pour chaque degré de liberté d'une articulation donnée, les première et deuxième butées sont les butées articulaires du degré de liberté de l'articulation donnée.

Selon une particularité de l'invention, chaque secteur angulaire de chaque degré de liberté de chaque articulation est divisé en plusieurs plages de valeurs angulaires de même grandeur. Selon un mode de réalisation, chaque plage de valeurs angulaires s'étend sur environ au moins 10 degrés. Selon un mode de réalisation privilégié, mais non limitatif, chaque plage de valeurs angulaires s'étend sur environ 10 degrés.

Comme indiqué précédemment, les données relatives aux positions des articulations déterminées par le boîtier d'acquisition 12 sont brutes et sont affinées par le module de traitement 32 et/ d'analyse 48.

Le procédé d'analyse des mouvements d'une personne comprend une étape d'attribution d'au moins un code de position pour au moins certaines articulations A0 à A13, de préférence pour chacune des articulations A0 à A13, à chaque instant t0 à tn.

Selon une configuration, chaque degré de liberté de chaque articulation est associé à au moins une lettre F, I, P, RA,.... Chaque plage de valeurs angulaires de chaque degré de liberté de chaque articulation est associée à un nombre entier, les nombres associés aux plages d'un secteur angulaire allant de la première butée à la deuxième butée correspondant au nombre entier d'une suite arithmétique de raison 1.

Le code de position d'une articulation à un instant t comprend au moins un couple d'au moins une lettre associée à un nombre, la lettre correspondant à un des degrés de liberté de l'articulation et le nombre à la plage de valeurs angulaires à laquelle appartient la valeur angulaire du degré de liberté de l'articulation à l'instant t. Pour une articulation donnée, entre deux instants successifs, le code de position ne comprend que le couple de lettre(s) et de nombre associé au degré de liberté dont la valeur angulaire a varié entre les deux instants successifs.

Le procédé d'analyse des mouvements d'une personne comprend une étape de détermination d'au moins un code d'action élémentaire à chaque instant t0 à tn.

Selon une configuration, le code d'action élémentaire à un instant t comprend au moins un couple d'au moins une lettre associée à un nombre.

A chacune des combinaisons de codes de position des différentes articulations A0 à A13 à un instant t donné est associée un code d'action élémentaire à l'instant t donné.

Ainsi, à titre d'exemple, comme illustré sur la figure 11, un mouvement Mvt référencé G7 comprend la succession d'actions élémentaires W4, Y7, V5, W4 correspondant à la combinaison de codes de position F3, F5, I6, ..., R4.

Le procédé d'analyse des mouvements d'une personne comprend une étape de vérification syntaxique des codes d'action élémentaire afin d'affiner les données brutes relatives aux positions des articulations.

Comme pour le premier mode opératoire, à partir d'une multitude observations d'une multitude de mouvements traduits sous la forme de syllabes correspondant aux codes de position, de mots correspondant aux codes d'action élémentaire ou de phrases correspondant aux mouvements, il est possible d'établir un langage structuré qui présente au moins une règle, généralement un ensemble de règles (comme des règles de grammaire par exemple) et au moins un lexique.

Grâce à ce langage structuré, l'étape de vérification syntaxique consiste à vérifier si les codes d'action élémentaire et/ou les codes de position attribués, déduits des données brutes acquises par le boîtier d'acquisition 12, respecte(nt) la (ou les) règle(s) de grammaire et le (ou les) lexique(s) du langage structuré et à les corriger si nécessaire.

Comme précédemment, chaque règle et chaque lexique du langage structuré sont stockés dans au moins une base de données 46, 46' et les étapes de segmentation, de détermination des positions des articulations, d'attribution des codes de position, d'attribution des codes d'action élémentaire et de vérification syntaxique sont réalisées par le module de traitement 32 et/ou d'analyse 48 comportant le réseau de neurones artificiels 42.

Pour affiner la vérification syntaxique, le procédé d'analyse peut se baser sur plusieurs langages structurés comportant des règles et un champ lexical communs à toutes les personnes observées et au moins une règle et/ou au moins un élément du champ lexical différent(s) d'une personne observée à l'autre. Ainsi, chaque personne observée peut être associé à un langage structuré qui lui est propre différent du langage structuré d'une autre personne. Dans ce cas, le procédé d'analyse comprend une étape de sélection du langage structuré associé à la personne observée pour l'étape d'analyse syntaxique.

Selon une autre variante illustrée par la figure 12, les données relatives aux articulations à chaque instant donné correspondent aux distances séparant chaque articulation avec les autres articulations. A titre d'exemple, comme illustré sur la figure 12, les données relatives aux articulations A0 à A6 à un instant tₕ sont répertoriées. Dans un but de simplification, seules les articulations des membres supérieurs sont répertoriées. Bien entendu, l'invention n'est pas limitée aux articulations des membres supérieurs et peut s'appliquer à toutes les articulations. Ainsi, la distance entre les articulations A3A5 est indiquée à l'intersection de la colonne A3 et de la ligne A5 ou à l'intersection de la colonne A5 et de la ligne A3.

Certaines distances, comme par exemple celles entre deux articulations séparées par un seul segment, sont fixes dans le temps. D'autres distances, comme celles entre deux articulations séparées par au moins deux segments varient en fonction du temps lors d'un mouvement de la personne observée.

Chaque distance séparant deux articulations varie dans un ensemble de valeurs borné par des première et deuxième butées qui sont fonction de la morphologie de la personne observée.

Pour chaque couple d'articulations, l'ensemble de valeurs est divisé en plusieurs plages de valeurs de même grandeur. Selon un mode de réalisation, chaque plage de valeurs s'étend sur environ au moins 5 centimètres.

Comme indiqué précédemment, les données relatives aux distances entre les différents couples d'articulations sont déterminées par le boîtier d'acquisition 12. Ces données sont brutes et doivent être affinées par le module de traitement 32 et/ d'analyse 48.

Selon un mode de réalisation privilégié, pour chaque couple d'articulations, à chaque instant donné, seule la plage de valeurs à laquelle appartient la valeur déterminée par le boîtier d'acquisition 12 est répertoriée. Chaque plage de valeurs est répertoriée par un repère alphanumérique L1 à L15 et/ou par une couleur. Dans le cas d'une couleur, le code couleur est choisi en fonction de la position de la plage de valeurs par rapport aux première et deuxième butées, le code couleur étant par exemple de plus en plus foncé lorsque la plage de valeurs se rapproche des première ou deuxième butées.

Comme pour les valeurs angulaires, le procédé d'analyse comprend une étape d'attribution, à chaque instant t0 à tn, d'au moins un code de position pour les différents couples d'articulations, en fonction de la plage de valeurs déterminée pour chacun des couples, de manière à former une combinaison de codes de position à chaque instant to à tn, une étape d'attribution d'au moins un code d'action élémentaire pour chaque instant donné t0 à tn correspondant à la combinaison de codes de position à l'instant donné t0 à tn et une étape de vérification syntaxique des codes d'action élémentaire et/ou des codes de position à partir d'au moins un langage structuré.

Bien entendu, l'invention n'est pas limitée aux articulations. Ainsi, le procédé d'analyse pourrait être mis en oeuvre à partir d'autres points caractéristiques de la personnes observés par un système d'acquisition, comme le boîtier d'acquisition 12 par exemple, fournissant des données brutes relatives aux positions desdits points caractéristiques.

De plus, le code de position n'est pas limité à un couple de lettre et de chiffre. Plus généralement, le code de position attribué à un instant donné comprend, pour chaque degré de liberté de chaque articulation, au moins un caractère (comme un couple de lettre et de nombre) correspondant à la plage de valeurs angulaires à laquelle appartient la valeur angulaire déterminée à l'instant donné pour le degré de liberté de l'articulation.

En complément, il est possible d'associer à chaque code de position et/ou d'action élémentaire un coefficient de pénibilité pour, en fonction notamment de la répétition du mouvement Mvt et/ou de l'action élémentaire Ace, en déduire un coefficient de pénibilité global.

Sur le plan structurel, chaque boîtier d'acquisition 12 peut comprendre, en plus du ou des capteurs 26, le module de traitement 32 et des composants 50 tels qu'une batterie, un système de refroidissement pour rendre le boîtier d'acquisition 12 autonome ainsi qu'un module de communication 52 pour permettre au boîtier d'acquisition 12 de communiquer avec d'autres éléments comme un serveur, un ordinateur distant, une tablette ou autres, comme illustré sur la figure 8.

Selon un mode de réalisation, les modules de traitement et d'analyse 32, 48, la ou les bases de données 46, 46' sont intégrés dans un ordinateur 54. Ce dernier peut comprendre entre autres un module de commande 56 pour contrôler chaque capteur 26, un module d'affichage 58 et un module de communication 60 pour permettre à l'ordinateur de communiquer avec un réseau 62 et/ou avec un autre appareil 64 (ordinateur, tablette ou analogue).

Le dispositif d'analyse des mouvements 10 peut comprendre au moins un capteur annexe 66, comme par exemple un capteur de température, une centrale inertielle. Le signal de chaque capteur annexe 66 peut être transmis au module de traitement 32.

Au moins l'une des bases de données peut être stockée dans un serveur distant 68.

Bien entendu, l'invention n'est pas limitée aux modes de réalisation décrits précédemment.

## Revendications

1. Procédé d'analyse d'au moins une séquence de mouvements réalisés par une personne (20) présentant un ensemble de points caractéristiques, chaque mouvement (Mvt) comprenant une succession d'actions élémentaires (Ace), ledit procédé comprenant une étape d'observation de la séquence de mouvements par au moins un système d'acquisition (12) configuré pour fournir des données brutes relatives aux positions d'au moins certains points caractéristiques de l'ensemble de points caractéristiques, ledit procédé comprenant en outre un réseau de neurones artificiels configuré pour réaliser une étape de segmentation de la séquence de mouvements en unités temporelles associées chacune à un instant (t0 à tn), une étape de détermination, pour chaque instant (t0 à tn), des positions d'au moins certains points caractéristiques de l'ensemble de points caractéristiques à l'aide du système d'acquisition (12), une étape d'attribution, à chaque instant (t0 à tn), d'au moins un code de position pour au moins certains points caractéristiques de l'ensemble de points caractéristiques en fonction pour chacun d'eux de la position déterminée de manière à former une combinaison de codes de position à chaque instant (to à tn), une étape d'attribution d'au moins un code d'action élémentaire pour chaque instant donné (t0 à tn) correspondant à la combinaison de codes de position à l'instant donné (t0 à tn) et une étape de vérification syntaxique des codes d'action élémentaire et/ou des codes de position à partir d'au moins un langage structuré qui présente au moins une règle et au moins un lexique afin d'affiner les données brutes relatives aux positions des points caractéristiques.

2. Procédé d'analyse selon la revendication précédente, **caractérisé en ce que** les actions élémentaires ont des durées égales, comprises entre 0,25 et 1 s.

3. Procédé d'analyse selon l'une des revendications précédentes, **caractérisé en ce que** la position de chaque point caractéristique est donnée en coordonnées sphériques dans au moins un référentiel lié à la personne.

4. Procédé d'analyse selon l'une des revendications précédentes, **caractérisé en ce que** les points caractéristiques sont les articulations de la personne observée.

5. Procédé d'analyse selon la revendication précédente, **caractérisé en ce que** la position de chaque articulation (A0 à A13) comprend une valeur angulaire pour chaque degré de liberté de l'articulation variant sur un secteur angulaire borné par des première et deuxième butées.

6. Procédé d'analyse selon la revendication précédente, **caractérisé en ce que** chaque secteur angulaire est divisé en plusieurs plages de valeurs angulaires, de même grandeur, chaque plage s'étendant sur environ au moins 10 degrés, et **en ce que** le code de position attribué à un instant donné comprend, pour chaque degré de liberté de chaque articulation, au moins un caractère correspondant à la plage de valeurs angulaires à laquelle appartient la valeur angulaire déterminée à l'instant donné du degré de liberté de l'articulation.

7. Procédé d'analyse selon la revendication 5 ou 6, **caractérisé en ce que**, pour chaque degré de liberté de chaque articulation, les première et deuxième butées sont les butées articulaires du degré de liberté de l'articulation.

8. Procédé d'analyse selon l'une des revendications précédentes, **caractérisé en ce que** l'étape de vérification syntaxique consiste à vérifier si les codes d'action élémentaire et/ou les codes de position attribués respecte(nt) la (ou les) règle(s) de grammaire et le (ou les) lexique(s) du langage structuré et à les corriger si nécessaire.

9. Dispositif d'analyse d'au moins une séquence de mouvements réalisés par une personne configuré pour la mise en oeuvre du procédé d'analyse selon l'une des revendications précédentes, la personne présentant un ensemble de points caractéristiques, chaque mouvement (Mvt) comprenant une succession d'actions élémentaires (Ace), ledit dispositif d'analyse comprenant au moins un système d'acquisition (12) configuré pour fournir des données brutes relatives aux positions d'au moins certains points caractéristiques de l'ensemble de points caractéristiques, ledit dispositif d'analyse comprenant en outre un module de traitement (32) et/ou d'analyse (4)8 comportant un réseau de neurones artificiels (42) configuré pour réaliser les étapes de segmentation, de détermination des positions des articulations, d'attribution des codes de position, d'attribution des codes d'action élémentaire et de vérification syntaxique ainsi qu'au moins une base de données (46, 46') pour stocker chaque règle et chaque lexique du langage structuré.

## Patentansprüche

1. Verfahren zur Analyse wenigstens einer Bewegungssequenz, die von einer Person (20) ausgeführt wird, die eine Menge von charakteristischen Punkten aufweist, wobei jede Bewegung (Mvt) eine Folge von Elementaraktionen (Ace) umfasst, wobei das Verfahren einen Schritt der Beobachtung der Bewegungssequenz durch wenigstens ein Erfassungssystem (12) aufweist, das so eingerichtet ist, dass es Rohdaten bezüglich der Positionen von zumindest bestimmten charakteristischen Punkten der Menge von charakteristischen Punkten liefert, und wobei das Verfahren außerdem ein künstliches neuronales Netz aufweist, das so eingerichtet ist, dass es einen Schritt der Segmentierung der Bewegungssequenz in Zeiteinheiten ausführt, die jeweils einem Zeitpunkt (tO bis tn) zugeordnet sind, dass es für jeden Zeitpunkt (tO bis tn) einen Schritt der Bestimmung der Positionen der zumindest bestimmten charakteristischen Punkte der Menge der charakteristischen Punkte mithilfe des Erfassungssystems (12) ausführt, dass es zu jedem Zeitpunkt (tO bis tn) einen Schritt der Zuweisung von wenigstens einem Positionscode für zumindest bestimmte charakteristische Punkte der Gesamtheit der charakteristischen Punkte in Abhängigkeit der für jeden von ihnen ermittelten Positionen ausführt, so dass eine Kombination von Positionscodes zu jedem Zeitpunkt (to bis tn) gebildet wird, dass es einen Schritt der Zuweisung wenigstens eines Elementaraktionscodes für jeden gegebenen Zeitpunkt (tO bis tn) ausführt, der der Kombination von Positionscodes zum gegebenen Zeitpunkt (tO bis tn) entspricht, und dass es einen Schritt der syntaktischen Überprüfung der Elementaraktionscodes und/oder der Positionscodes ausgehend von wenigstens einer strukturierten Sprache ausführt, die wenigstens eine Regel und wenigstens ein Lexikon aufweist, um die Rohdaten bezüglich der Positionen der charakteristischen Punkte zu verfeinern.

2. Analyseverfahren nach dem vorhergehenden Anspruch, **dadurch gekennzeichnet, dass** die Elementaraktionen die gleiche Dauer haben, die zwischen 0,25 und 1 s liegt.

3. Analyseverfahren nach einem der vorhergehenden Ansprüche, **dadurch gekennzeichnet, dass** die Position jedes charakteristischen Punktes in sphärischen Koordinaten in wenigstens einem personenbezogenen Bezugssystem angegeben wird.

4. Analyseverfahren nach einem der vorhergehenden Ansprüche, **dadurch gekennzeichnet, dass** die charakteristischen Punkte die Gelenke der beobachteten Person sind.

5. Analyseverfahren nach dem vorhergehenden Anspruch, **dadurch gekennzeichnet, dass** die Position jedes Gelenks (A0 bis A13) einen Winkelwert für jeden Freiheitsgrad des Gelenks umfasst, der über einen Winkelsektor variiert, der von einem ersten und einem zweiten Anschlag begrenzt wird.

6. Analyseverfahren nach dem vorhergehenden Anspruch, **dadurch gekennzeichnet, dass** jeder Winkelsektor in mehrere Bereiche von Winkelwerten gleicher Größe unterteilt ist, wobei sich jeder Bereich über wenigstens etwa 10 Grad erstreckt, und dass der zu einem gegebenen Zeitpunkt zugewiesene Positionscode für jeden Freiheitsgrad jedes Gelenks wenigstens ein Zeichen aufweist, das dem Bereich von Winkelwerten entspricht, zu dem der zu dem gegebenen Zeitpunkt ermittelte Winkelwert des Freiheitsgrads des Gelenks gehört.

7. Analyseverfahren nach Anspruch 5 oder 6, **dadurch gekennzeichnet, dass** für jeden Freiheitsgrad jedes Gelenks die ersten und zweiten Anschläge die Gelenkanschläge des Freiheitsgrads des Gelenks sind.

8. Analyseverfahren nach einem der vorhergehenden Ansprüche, **dadurch gekennzeichnet, dass** der Schritt der syntaktischen Überprüfung darin besteht, zu überprüfen, ob die zugewiesenen Elementaraktionscodes und/oder Positionscodes die Grammatikregel(n) und das Lexikon (oder die Lexika) der strukturierten Sprache beachten, und sie gegebenenfalls zu korrigieren.

9. Vorrichtung zur Analyse wenigstens einer Sequenz von Bewegungen, die von einer Person ausgeführt werden, die für die Durchführung des Analyseverfahrens nach einem der vorhergehenden Ansprüche eingerichtet ist, wobei die Person eine Menge von Merkmalspunkten aufweist, wobei jede Bewegung (Mvt) eine Folge von Elementaraktionen (Ace) umfasst, wobei die Analysevorrichtung wenigstens ein Erfassungssystem (12) aufweist, das dazu eingerichtet ist, Rohdaten bezüglich der Positionen von wenigstens bestimmten charakteristischen Punkten der Menge von charakteristischen Punkten zu liefern, wobei die Analysevorrichtung außerdem ein Verarbeitungs- (32) und/oder Analysemodul (4)8 mit einem künstlichen neuronalen Netz (42) aufweist, das so eingerichtet ist, dass es die Schritte der Segmentierung, der Bestimmung der Gelenkpositionen, der Zuweisung der Positionscodes, der Zuweisung der Elementaraktionscodes und der syntaktischen Überprüfung ausführt, sowie wenigstens eine Datenbank (46, 46') zum Speichern jeder Regel und jedes Lexikons der strukturierten Sprache aufweist.

## Claims

1. Method for analyzing at least one sequence of movements performed by a person (20) having a set of characteristic points, each movement (Mvt) comprising a succession of elementary actions (Ace), said method comprising a step of observing the sequence of movements using at least one acquisition system (12) configured for supplying raw data relating to the positions of at least some characteristic points of the set of characteristic points, said method further comprising at least an artificial neural network configured to perform a step of segmenting the sequence of movements into time units, each associated with an instant (t0 to tn), a step of determining, for each instant (t0 to tn), the positions of at least some characteristic points of the set of characteristic points, using the acquisition system (12), a step of assigning, at each instant (t0 to tn), at least one position code for at least some characteristic points of the set of characteristic points, as a function, for each of them, of the determined position, so as to form a combination of position codes at each instant (t0 to tn); a step of assigning at least one elementary action code for each given instant (t0 to tn) corresponding to the combination of position codes at the given instant (t0 to tn); and a step of syntactically verifying the elementary action codes and/or the position codes on the basis of at least one structured language which has at least one rule and at least one lexicon, in order to refine the raw data relating to the positions of the characteristic points.

2. Method of analysis as claimed in the preceding claim, **characterized in that** the elementary actions have equal durations of between 0.25 and 1 s.

3. Method of analysis as claimed in any of the preceding claims, **characterized in that** the position of each characteristic point is given in spherical coordinates in at least one reference frame linked to the person.

4. Method of analysis as claimed in any of the preceding claims, **characterized in that** the characteristic points are the articulations of the person observed.

5. Method of analysis as claimed in the preceding claim, **characterized in that** the position of each articulation (A0 to A13) comprises an angular value for each degree of freedom of the articulation, varying over an angular sector bounded by first and second limits.

6. Method of analysis as claimed in the preceding claim, **characterized in that** each angular sector is divided into a plurality of ranges of angular values, of equal size, each range extending over about 10 degrees at least, and **in that** the position code assigned at a given instant comprises, for each degree of freedom of each articulation, at least one character corresponding to the range of angular values which includes the angular value, determined at the given instant, of the degree of freedom of the articulation.

7. Method of analysis as claimed in claim 5 or 6, **characterized in that**, for each degree of freedom of each articulation, the first and second limits are the articulation limits of the degree of freedom of the articulation.

8. Method of analysis as claimed in any of the preceding claims, **characterized in that** the step of syntactic verification consists in verifying whether or not the elementary action codes and/or the assigned position codes comply with the grammatical rule(s) and the lexicon(s) of the structured languages, and correcting them if necessary.

9. Device for analyzing at least one sequence of movements performed by a person, configured for the implementation of the method of analysis as claimed in any of the preceding claims, the person having a set of characteristic points, each movement (Mvt) comprising a succession of elementary actions (Ace), said analysis device comprising at least an acquisition system (12) configured for supplying raw data relating to the positions of at least some characteristic points of the set of characteristic points, said analysis device further comprising a processing module (32) and/or an analysis module (48) including an artificial neural network (42) configured for executing the steps of segmenting, determining the positions of the articulations, assigning position codes, assigning elementary action codes, and syntactic verification, together with at least one database (46, 46') for storing each rule and each lexicon of the structured language.
